# EUROPEAN PATENT APPLICATION

(11) **EP 4 851 845 A1**
(43) Date of publication of application: **09.12.2026**
(21) Application number: 25180759.0
(22) Date of filing: 04.06.2025
(51) Int. Cl.: G06F 30/15, G06F 30/17, G06F 30/23

(54) **SYSTEM AND METHOD FOR COUPLED ELECTRO-MECHANICAL SIMULATION OF ELECTRIC MOTORS**

(71) Applicant: Siemens Industry Software NV, 3001 Leuven (BE); Siemens Electronic Design Automation ULC, Kanata, Ontario K2K 3C9 (CA); Siemens Industry Software GmbH, 8047 Zürich (CH); Siemens Industry Software S.L., 08940 Cornella de Llobregat (ES)
(72) Inventor: The designation of the inventor has not yet been filed
(74) Representative: Siemens Patent Attorneys

(57) **Abstract**

The present disclosure provides a system for simulating electro-mechanical interactions in an electric motor. The system includes a processor and a memory storing instructions that, when executed by the processor, cause the system to generate a look-up table of electromagnetic forces corresponding to different air gap sizes between a rotor and a stator of the electric motor using a magnetostatic solver. The system performs a transient mechanical simulation of the electric motor using a mechanical solver. During the transient mechanical simulation, the system selects electromagnetic forces from the look-up table based on current air gap sizes and applies the selected electromagnetic forces to a deformed geometry of the electric motor model.

## Description

### FIELD OF INVENTION

The present disclosure relates to simulation of electro-mechanical interactions in electric motors, and more particularly to a system and method for efficient coupled simulation of electromagnetic forces and mechanical deformations in electric motor designs.

### BACKGROUND

Electric motors are widely used in various industrial applications, from manufacturing to transportation. The performance and efficiency of these motors depend heavily on the complex interactions between their electromagnetic and mechanical components. Accurately simulating these electro-mechanical interactions is crucial for optimizing motor designs and predicting operational behavior.

Traditionally, electromagnetic and mechanical simulations have been performed separately, with limited coupling between the two domains. This approach often fails to capture the full complexity of motor behavior, especially in cases where the air gap between rotor and stator varies during operation. Changes in the air gap size can significantly affect the electromagnetic forces acting on the motor components, which in turn influence the mechanical deformation and overall performance.

Recent advancements in computational methods have enabled more sophisticated approaches to motor simulation. For example, US Patent Application US-20240339886-A1 discloses a method for designing electric motor cans that takes into account expected deformations during operation. This approach uses measurement data and deformation simulations to identify loaded regions of the can and incorporate asymmetric design elements to counteract these deformations. While this method improves can design, it does not directly address the dynamic coupling between electromagnetic forces and mechanical deformations throughout the entire motor structure.

Another relevant development is described in US Patent Application US-20240386166-A1, which presents a modeling method for electromagnetic forces and vibration response in surface-mounted permanent magnet machines. This approach combines a discrete equivalent magnetic network model with vibration transfer functions to analyze both electromagnetic and mechanical aspects of motor behavior. However, the method focuses primarily on steady-state analysis and does not fully capture the transient interactions between electromagnetic forces and mechanical deformations during dynamic operation.

Despite these advancements, there remains a need for efficient and accurate methods to simulate the coupled electro-mechanical behavior of electric motors, particularly during transient operations. Such simulations are valuable for predicting motor performance under various operating conditions, optimizing designs for efficiency and reliability, and understanding potential failure modes. Improved simulation techniques could lead to more robust motor designs, reduced development costs, and enhanced performance across a wide range of applications.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a system for simulating electro-mechanical interactions in an electric motor is provided. The system includes a processor and a memory storing instructions that, when executed by the processor, cause the system to generate, using a magnetostatic solver, a look-up table of electromagnetic forces corresponding to different air gap sizes between a rotor and a stator of the electric motor. The system is configured to perform, using a mechanical solver, a transient mechanical simulation of the electric motor. During the transient mechanical simulation, the system selects electromagnetic forces from the look-up table based on current air gap sizes and applies the selected electromagnetic forces to a deformed geometry of the electric motor model.

A magnetostatic solver is a computational tool used to calculate the magnetic field distribution in a system where the magnetic fields are static or slowly varying. It solves Maxwell's equations for magnetostatics, typically using finite element methods. In the context of electric motor simulation, the magnetostatic solver computes the magnetic fields and forces generated by the permanent magnets and electromagnets in the motor, taking into account the geometry and material properties of the motor components. This solver is suitable for accurately determining the electromagnetic forces that interact with the mechanical structure of the motor, enabling the coupled electro-mechanical simulation approach described in this invention. A commercially available example of a magnetostatic solver is Simcenter 3D Low Frequency EM, which is a widely used, commercially available magnetostatic solver for electromagnetic field simulations. It supports static, time-harmonic, and transient analyses, making it a precious tool for electric motor design and analysis.

According to other aspects of the present disclosure, the system may include one or more of the following features. The look-up table may include electromagnetic forces corresponding to different air gap sizes between the rotor and stator. The system may interpolate, during the transient mechanical simulation, between pre-computed electromagnetic forces in the look-up table based on a current air gap size. The system may generate, using the magnetostatic solver, the look-up table for different angular positions of the rotor relative to the stator. The mechanical solver may be configured to perform a transient rotor dynamics simulation. The system may model variations in the air gap size during the transient mechanical simulation. Modeling the variations in the air gap size may comprise defining a fictive mid-plane between the rotor and the stator, modeling distances to the mid-plane for individual magnets, and computing the air gap size as a combination of axial distances to the mid-plane weighted by radial interpolation functions of tangential distances between rotor and stator magnets.

According to another aspect of the present disclosure, a method for simulating electro-mechanical interactions in an electric motor is provided. The method includes generating, by a processor executing a magnetostatic solver, a look-up table of electromagnetic forces corresponding to different air gap sizes between a rotor and a stator of the electric motor. The method further includes performing, by the processor executing a mechanical solver, a transient mechanical simulation of the electric motor. During the transient mechanical simulation, the method includes selecting, by the processor, electromagnetic forces from the look-up table based on current air gap sizes and applying the selected electromagnetic forces to a deformed geometry of the electric motor model.

According to other aspects of the present disclosure, the method may include one or more of the following features. The look-up table may include electromagnetic forces corresponding to different air gap sizes between the rotor and stator. The method may include interpolating, by the processor during the transient mechanical simulation, between pre-computed electromagnetic forces in the look-up table based on a current air gap size. The method may include generating, by the processor executing the magnetostatic solver, the look-up table for different angular positions of the rotor relative to the stator. Performing the transient mechanical simulation may comprise executing, by the processor, a transient rotor dynamics simulation using the mechanical solver. The method may include modeling, by the processor, variations in the air gap size during the transient mechanical simulation. Modeling the variations in the air gap size may comprise defining, by the processor, a fictive mid-plane between the rotor and the stator, modeling distances to the mid-plane for individual magnets, and computing, by the processor, the air gap size as a combination of axial distances to the mid-plane weighted by radial interpolation functions of tangential distances between rotor and stator magnets.

According to another aspect of the present disclosure, a non-transitory computer-readable storage medium storing instructions is provided. When executed by a processor, the instructions cause the processor to perform a method for simulating electro-mechanical interactions in an electric motor. The method includes generating, using a magnetostatic solver, a look-up table of electromagnetic forces corresponding to different air gap sizes between a rotor and a stator of the electric motor. The method further includes performing, using a mechanical solver, a transient mechanical simulation of the electric motor. During the transient mechanical simulation, the method includes selecting electromagnetic forces from the look-up table based on current air gap sizes and applying the selected electromagnetic forces to a deformed geometry of the electric motor model.

According to other aspects of the present disclosure, the non-transitory computer-readable storage medium may include one or more of the following features. The look-up table may include electromagnetic forces corresponding to different air gap sizes between the rotor and stator. The method may include interpolating, by the processor during the transient mechanical simulation, between pre-computed electromagnetic forces in the look-up table based on a current air gap size. The method may include generating, by the processor executing the magnetostatic solver, the look-up table for different angular positions of the rotor relative to the stator. Performing the transient mechanical simulation may comprise executing, by the processor, a transient rotor dynamics simulation using the mechanical solver. The method may include modeling, by the processor, variations in the air gap size during the transient mechanical simulation by defining a fictive mid-plane between the rotor and the stator, modeling distances to the mid-plane for individual magnets, and computing the air gap size as a combination of axial distances to the mid-plane weighted by radial interpolation functions of tangential distances between rotor and stator magnets.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates an isometric view of an electric motor component, according to aspects of the present disclosure.
FIG. 2 illustrates an isometric view of an electric motor assembly, according to an embodiment.
FIG. 3 illustrates a block diagram of a computer-aided engineering system for simulating electro-mechanical interactions, according to aspects of the present disclosure.
FIG. 4 illustrates a block diagram of a one-way coupling system for simulating electro-mechanical interactions.
FIG. 5 illustrates a block diagram of a transient two-way coupling system for electro-mechanical simulation.
FIG. 6 illustrates a block diagram of a 1.5-way coupling system for simulating electro-mechanical interactions, according to the invention.
FIG. 7 illustrates a flowchart of a method for simulating electro-mechanical interactions in an electric motor, according to an embodiment.
FIG. 8 illustrates a flowchart of a method for modeling air gap in an electric motor simulation, according to aspects of the present disclosure.
FIG. 9 illustrates a flowchart of a method for simulating electro-mechanical interactions in an electric motor, according to an embodiment.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The system for simulating electro-mechanical interactions in electric motors comprises a processor and a memory storing instructions. The instructions, when executed by the processor, enable the system to perform various simulation tasks. The system includes a computer aided engineering environment for conducting comprehensive simulations of electric motors.

Within the computer aided engineering environment, a low frequency electromagnetic module and a rotor dynamics module work in conjunction to simulate the complex interactions between electromagnetic and mechanical components of electric motors. The low frequency electromagnetic module handles the electromagnetic aspects of the simulation, while the rotor dynamics module focuses on the mechanical behavior of the motor's rotating components.

A solver is used in the simulation process, performing calculations and resolving equations to accurately model the electro-mechanical interactions. The solver integrates data from both the low frequency electromagnetic module and the rotor dynamics module to provide a comprehensive simulation of the electric motor's behavior.

The system is capable of simulating various types of electric motors, including axial flux motors and transverse flux motors. This versatility allows for the analysis of different motor designs and configurations, enabling engineers to optimize motor performance and efficiency.

The method for simulating electro-mechanical interactions in electric motors is implemented on a non-transitory computer-readable storage medium storing instructions executed by a processor. This implementation ensures that the simulation method is portable and can be executed on various computing platforms, providing flexibility for users of the simulation system.

By combining electromagnetic and mechanical simulations, the system provides a comprehensive approach to analyzing electric motor behavior. This integrated simulation capability allows for the investigation of complex phenomena such as the impact of air gap variations on motor performance, the effects of manufacturing tolerances, and the dynamic behavior of the motor under various operating conditions.

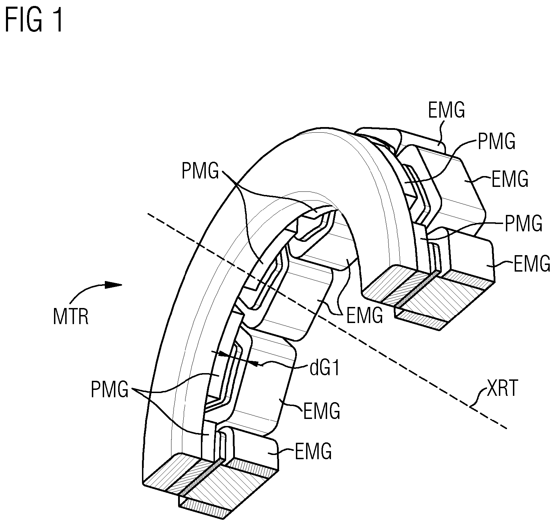

Figure 1 illustrates an isometric view of an electric motor component. The component comprises two main elements arranged in a circular pattern: multiple permanent magnets PMG and multiple electro magnets EMG distributed around the circumference.

The permanent magnets PMG are depicted as rectangular blocks positioned on the outer ring of the circular structure. These permanent magnets PMG form part of the motor's circular assembly and provide constant magnetic fields.

Positioned on an inner ring, interspersed between the permanent magnets PMG, are the electro magnets EMG. The electro magnets EMG are shown as rectangular blocks with a different color or shading from the permanent magnets PMG. The electro magnets EMG are arranged to interact with the permanent magnets PMG, creating the electromagnetic fields necessary for the motor's operation.

The structure reveals an alternating arrangement of the permanent magnets PMG and the electro magnets EMG around the curved surface. This configuration allows for magnetic field interactions within the motor. The permanent magnets PMG and the electro magnets EMG are placed in close proximity to each other, enabling electromagnetic interaction.

The design illustrates the spatial relationship between the permanent magnets PMG and the electro magnets EMG, which is relevant for the conversion of electrical energy into mechanical motion in the electric motor MTR. This arrangement facilitates the control and operation of the electric motor MTR.

An arrow labeled "dG" is shown indicating the direction of the air gap between the rotor and stator components. This gap allows for the rotor's rotation around the rotation axis XRT, which is shown as a dashed line running through the center of the motor MTR. This air gap is a critical parameter in electric motor design that affects the motor's performance. The permanent magnets PMG and electro magnets EMG are arranged symmetrically around the rotation axis XRT, ensuring balanced magnetic interactions during motor operation.

The system analyzes the impact of variations of the air-gap size, which may be caused by manufacturing tolerances or other artefacts. These variations can affect the electromagnetic forces between the permanent magnet PMG and the electro magnet EMG, potentially influencing the motor's performance and efficiency.

Additionally, the system analyzes the impact of variations of the air-gap size caused by dynamic displacements due to centrifugal forces. As the motor operates at high speeds, centrifugal forces can cause deformation of the rotor, leading to changes in the air-gap size. These dynamic variations are considered in the simulation to accurately predict the motor's behavior under different operating conditions.

Furthermore, the system analyzes the impact of variations of the air-gap size caused by eccentricities. Eccentricities in the rotor or stator can lead to uneven air-gap sizes around the circumference of the motor, potentially causing unbalanced magnetic forces and vibrations. The simulation takes these eccentricities into account to provide a comprehensive analysis of the motor's performance and stability.

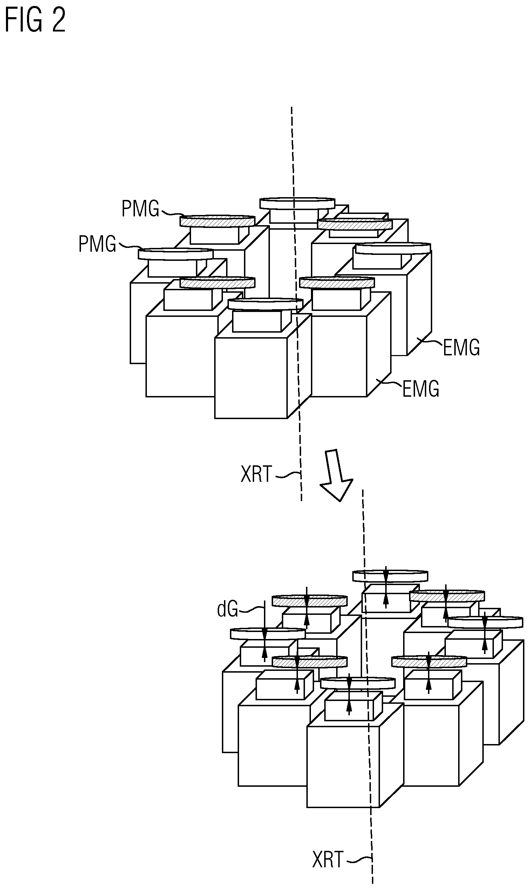

Figure 2 illustrates a schematic isometric view of an electric motor assembly. The assembly consists of two main components: a rotor and a stator, arranged concentrically.

The rotor is depicted only with its permanent magnets PMG, shown as elements arranged radially around its circumference around the rotation axis XRT. The stator is shown as a structure axially next to the rotor, featuring rectangular blocks. These blocks represent the electro magnets EMG.

Between the rotor and stator, there is a gap, which allows for the rotor's rotation. Figure 2 shows the rotor in two different positions relative to the stator, demonstrating the relative movement between these components during motor operation changing the gap dG.

In the upper configuration, the permanent magnets PMG of the rotor are aligned with the stator's electro magnets EMG. In the lower configuration, the electro magnets EMG of the stator are shown to be axially shifted slightly with regard to the rotor's permanent magnets PMG.

The assembly's design facilitates the interaction between the permanent magnets PMG on the rotor and the electro magnets EMG on the stator, creating the electromagnetic fields necessary for the motor's rotation. This configuration enables the conversion of electrical energy into mechanical motion.

The figure illustrates the key components and their arrangement that are crucial for the simulation system to analyze. The system simulates this electric motor assembly at various rotational speeds, ranging from very low speeds below 500 RPM to high speeds at or above 3000 RPM. This wide range of simulation capabilities allows for comprehensive analysis of the motor's performance under different operating conditions.

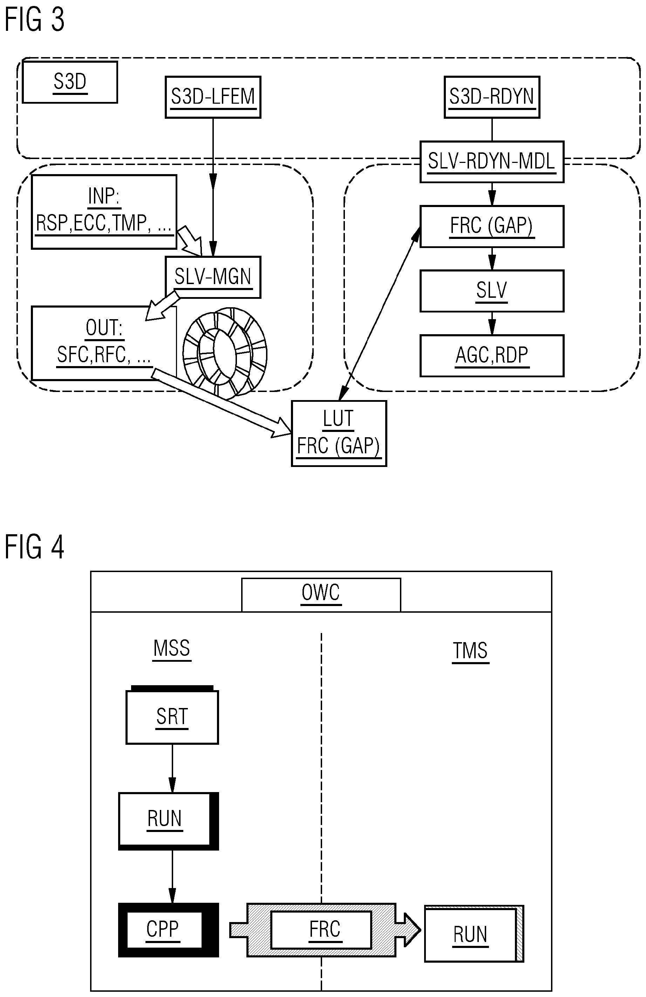

Figure 3 illustrates a block diagram of the computer aided engineering environment S3D and its components. A computer aided engineering environment S3D includes a low frequency electromagnetic module S3D - LFEM and a rotor dynamics module S3D - RDYN for simulating electro-mechanical interactions in electric motors.

The low frequency electromagnetic module S3D - LFEM receives input INP including rotation speed RSP, eccentricity ECC, temperature TMP and maybe additional parameters. The low frequency electromagnetic module S3D - LFEM processes these inputs to generate electromagnetic data.

A solver SLV, labeled "SLV - MGN", connects to the low frequency electromagnetic module S3D - LFEM. This solver SLV processes the electromagnetic data and generates forces FRC that are applied to the electric motor model MDL.

The rotor dynamics module S3D - RDYN connects to another solver SLV, labeled "SLV - RDYN - MDL". This solver SLV processes the rotor dynamics calculations and interacts with the forces FRC generated by the SLV - MGN solver.

The forces FRC are applied to the mechanical model, which is represented by the "SLV" block connected to the FRC block. This block simulates the mechanical response of the motor to the applied electromagnetic forces.

The computer aided engineering environment S3D includes an output OUT block which provides results such as shear forces SFC and radial forces RFC from the simulation.

The mechanical solver SLV is configured to perform a transient rotor dynamics RDYN simulation. This allows the system to simulate transient scenarios and investigate the entire operating envelope of the motor, including extreme and fault scenarios.

The computer aided engineering environment S3D generates a look-up table LUT of electromagnetic forces FRC corresponding to different air gap sizes between a rotor and a stator of the electric motor using a magnetostatic solver SLV. The system then performs a transient mechanical simulation of the electric motor using the mechanical solver SLV.

During the transient mechanical simulation, the system selects electromagnetic forces FRC from the look-up table LUT based on current air gap GAP sizes and maybe other geometry parameters like circumferential relative position of permanents magnets and electro magnets to each other and applies the selected electromagnetic forces FRC to a potentially deformed geometry of the electric motor model MDL. This approach allows for accurate simulation of the electro-mechanical interactions between the permanent magnet PMG and the electro magnet EMG, considering the dynamic changes in air gap size during motor operation.

The one-way coupling system described in Figure 4 represents an alternative approach to simulating electro-mechanical interactions in electric motors, but it is not the primary focus of the invention. While this method offers some computational efficiency, it has notable drawbacks that the invention aims to address.

In the one-way coupling approach, electromagnetic forces are pre-computed and applied to the mechanical simulation without feedback. This unidirectional transfer of data from the magneto-static-simulation to the transient mechanical simulation can lead to inaccuracies in the results. The method does not account for how mechanical deformations might affect the electromagnetic field distribution in real-time, potentially missing important dynamic interactions between the two physical domains.

The invention, in contrast, proposes a more sophisticated 1.5-way coupling method that aims to balance computational efficiency with improved accuracy. By using a look-up table of pre-computed electromagnetic forces for various air gap sizes and updating the force selection based on the current deformed geometry during the transient mechanical simulation, the invention captures more of the dynamic interplay between electromagnetic and mechanical effects. This approach helps mitigate the inaccuracies inherent in the simpler one-way coupling method while still maintaining computational efficiency compared to full two-way coupling.

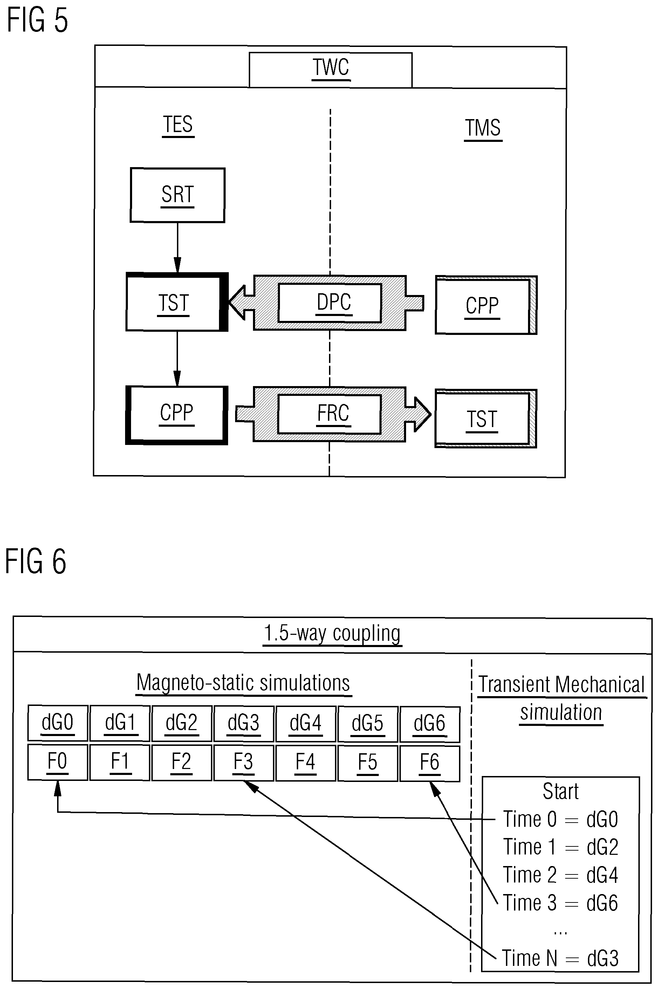

The computer aided engineering environment includes a transient two-way-coupling system for electro-mechanical simulation of the electric motor model, as illustrated in Figure 5. The transient two-way-coupling system comprises a transient electromagnetic simulation and a transient mechanical simulation, which exchange data bidirectionally to model the complex interactions between electromagnetic and mechanical phenomena in the electric motor model.

Figure 5 illustrates a block diagram of the transient two-way-coupling system. The system begins with a start block in the transient electromagnetic simulation section. From the start block, the process moves to a timestep block, which represents discrete time intervals for the simulation. The timestep block connects to a coupling point, which serves as the interface between the transient electromagnetic simulation and the transient mechanical simulation.

In the transient mechanical simulation section, the coupling point connects to a forces block. The forces block receives electromagnetic force data from the transient electromagnetic simulation and applies these forces to the electric motor model. The forces block then connects to another timestep block within the transient mechanical simulation section.

The transient two-way-coupling system operates in an iterative manner, with data flowing bidirectionally between the transient electromagnetic simulation and the transient mechanical simulation. After each timestep in the transient mechanical simulation, displacement data is sent back to the transient electromagnetic simulation via the coupling point. This displacement data is used to update the electromagnetic simulation, which then calculates new forces based on the updated geometry.

The solver in the transient electromagnetic simulation uses the displacement data to recalculate the electromagnetic fields and forces, taking into account the deformed geometry of the electric motor model. These updated forces are then sent back to the transient mechanical simulation for the next timestep.

This iterative process continues throughout the simulation, allowing for a more accurate representation of the dynamic interactions between the electromagnetic and mechanical aspects of the electric motor model. The transient two-way-coupling system accounts for how mechanical deformations affect the electromagnetic field distribution in real-time, capturing important dynamic interactions between the two physical domains.

While the transient two-way-coupling system provides a high level of accuracy in simulating the electro-mechanical interactions, it operates much slower than other coupling methods. The computational cost of recalculating electromagnetic fields and forces at each timestep results in significantly longer simulation times compared to one-way coupling or the 1.5-way coupling method of the invention.

While the transient two-way-coupling system provides valuable insights into the electro-mechanical behavior of the electric motor model, its high computational cost limits its practical application for rapid design iterations or real-time simulations. The invention addresses this limitation by proposing a more efficient 1.5-way coupling method that balances accuracy with computational speed.

The computer aided engineering environment includes a 1.5-way coupling system for electro-mechanical simulation of the electric motor model, as illustrated in Figure 6. The 1.5-way coupling system combines pre-computed magneto-static simulations with a transient mechanical simulation to efficiently model the complex interactions between electromagnetic and mechanical phenomena in the electric motor model.

Figure 6 illustrates a block diagram of the 1.5-way coupling system. The system includes multiple magneto-static simulations, each corresponding to a different air gap size between the rotor and stator of the electric motor model. The air gap sizes are represented by an initial gap size dG0, a first gap size dG1, a second gap size dG2, a third gap size dG3, a fourth gap size dG4, a fifth gap size dG5, and a sixth gap size dG6. Each of these magneto-static simulations generates a corresponding force, represented by an initial force F0, a first force F1, a second force F2, a third force F3, a fourth force F4, a fifth force F5, and a sixth force F6.

The transient mechanical simulation section of the 1.5-way coupling system is represented by a single block labeled "Start" and includes time steps from Time 0 to Time N. The time steps are correlated with specific gap sizes from the magneto-static simulations, with Time 0 corresponding to the initial gap size dG0, Time 1 to the second gap size dG2, Time 2 to the fourth gap size dG4, Time 3 to the sixth gap size dG6, and Time N to the third gap size dG3.

The solver generates a look-up table that includes the electromagnetic forces F0, F1, F2, F3, F4, F5, and F6 corresponding to the different air gap sizes dG0, dG1, dG2, dG3, dG4, dG5, and dG6 between the rotor and stator. This comprehensive approach ensures that the system can accurately model the electromagnetic forces for various air gap configurations that may occur during the operation of the electric motor model.

During the transient mechanical simulation, the system interpolates between the pre-computed electromagnetic forces in the look-up table based on the current air gap size. The system uses two main methods for force interpolation:
1. Transfinite interpolation: This method is employed when only two parameters with uniform discretization are considered. It provides an efficient way to interpolate forces for simpler cases.
2. Mesh-less technology: For more general cases involving multiple parameters or non-uniform discretization, the system utilizes mesh-less technology for force interpolation. This approach offers greater flexibility and accuracy in handling complex force distributions.

The 1.5-way coupling system offers several advantages over both one-way coupling and two-way coupling approaches:
1. Improved accuracy compared to one-way coupling: By considering the impact of mechanical deformations on electromagnetic forces through the use of the look-up table and interpolation, the 1.5-way coupling system captures more of the dynamic interactions between electromagnetic and mechanical phenomena than a simple one-way coupling approach.
2. Computational efficiency compared to two-way coupling: Unlike the computationally intensive two-way coupling approach, which requires recalculation of electromagnetic fields at each time step, the 1.5-way coupling system uses pre-computed forces and interpolation. This significantly reduces the computational time required for simulations while still maintaining a high degree of accuracy.
3. Flexibility in modeling various scenarios: The look-up table approach allows for easy simulation of different mechanical scenarios, such as manufacturing tolerances or eccentricities, without the need for repeated electromagnetic simulations. This flexibility enables more comprehensive analysis of the electric motor model under various operating conditions.
4. Balanced approach: The 1.5-way coupling system strikes a balance between accuracy and computational efficiency, making it suitable for both detailed analysis and rapid design iterations in the development of electric motors.

By utilizing the 1.5-way coupling system, the computer aided engineering environment enables efficient and accurate simulation of electro-mechanical interactions in the electric motor model, considering the dynamic changes in air gap size and their impact on electromagnetic forces throughout the motor's operation.

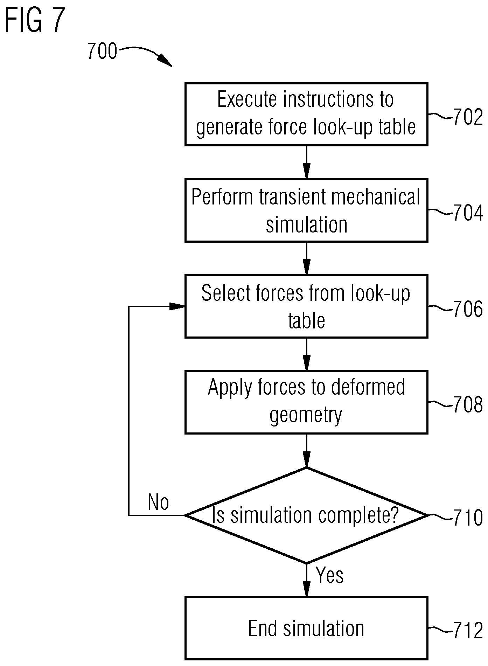

The computer aided engineering environment includes a method 700 for simulating electro-mechanical interactions in an electric motor, as illustrated in Figure 7. The method 700 comprises several steps that enable accurate modeling of the complex interplay between electromagnetic forces and mechanical deformations in the electric motor model.

The method 700 begins with a step 702, where the computer aided engineering environment generates a force look-up table. This force look-up table contains pre-computed electromagnetic forces corresponding to different air gap sizes between the rotor and stator of the electric motor model. The force look-up table includes the initial force, the first force, the second force, the third force, the fourth force, the fifth force, and the sixth force, each associated with the initial gap size, the first gap size, the second gap size, the third gap size, the fourth gap size, the fifth gap size, and the sixth gap size, respectively.

Following the generation of the force look-up table, the method 700 proceeds to a step 704, where the computer aided engineering environment performs a transient mechanical simulation of the electric motor model. This simulation captures the dynamic behavior of the electric motor model over time, accounting for various factors such as the rotation speed and mechanical loads.

During the transient mechanical simulation, the method 700 includes a step 706 where the computer aided engineering environment selects forces from the previously generated look-up table. The selection of forces is based on the current air gap sizes in the simulated electric motor model. This step allows the simulation to account for changes in electromagnetic forces as the air gap size varies due to mechanical deformations or other factors.

The method 700 then proceeds to a step 708, where the computer aided engineering environment applies the selected forces to the deformed geometry of the electric motor model. This step ensures that the simulation accurately represents the interaction between electromagnetic forces and the mechanical structure of the electric motor model as it deforms during operation.

After applying the forces, the method 700 includes a step 710 where the computer aided engineering environment determines if the simulation is complete. If the simulation is not complete, the method 700 returns to step 706 to select new forces based on the updated air gap sizes. This iterative process continues until the simulation is determined to be complete.

Once the simulation is complete, the method 700 concludes with a step 712, where the computer aided engineering environment ends the simulation process.

The method 700 enables the computer aided engineering environment to model variations in the air gap size during the transient mechanical simulation. This capability allows for accurate representation of dynamic changes in the electromagnetic forces as the air gap size fluctuates due to factors such as mechanical deformation, thermal expansion, or manufacturing tolerances.

Furthermore, the method 700 allows the computer aided engineering environment to model manufacturing tolerances and eccentricities by including local geometrical perturbations in the mechanical model. These perturbations can represent variations in component dimensions or assembly imperfections that affect the air gap size and, consequently, the electromagnetic forces acting on the electric motor model.

Additionally, the computer aided engineering environment can model manufacturing tolerances and eccentricities by including local offset in the sensors used to access measurements inside the model. This approach enables the simulation to account for potential measurement inaccuracies or sensor misalignments that may occur in real-world electric motor systems.

By incorporating these modeling capabilities, the method 700 provides a comprehensive approach to simulating electro-mechanical interactions in electric motors. The computer aided engineering environment can accurately represent the complex interplay between electromagnetic forces and mechanical behavior, accounting for various factors that influence electric motor performance and efficiency.

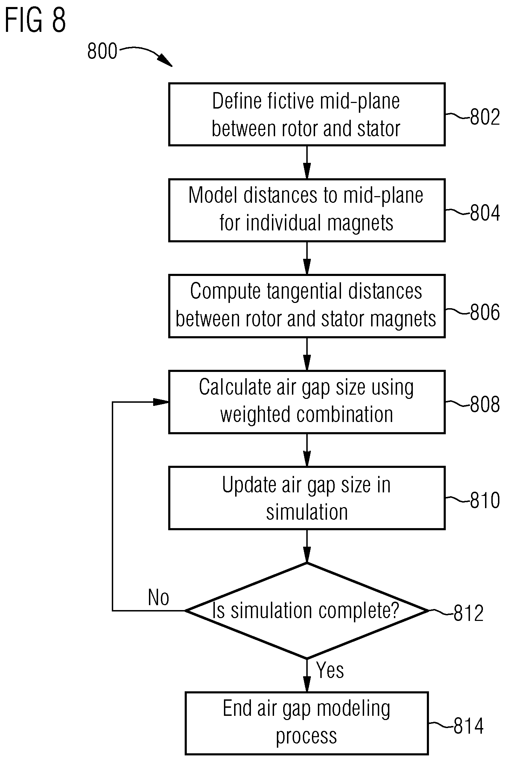

The computer aided engineering environment includes a method 800 for modeling the air gap in electric motor simulation, as illustrated in Figure 8. The method 800 comprises several steps that enable accurate representation of the air gap variations during the simulation of the electric motor model.

The method 800 begins with a step 802, where the computer aided engineering environment defines a fictive mid-plane between the rotor and the stator of the electric motor model. This fictive mid-plane serves as a reference surface for subsequent calculations of the air gap size.

Following the definition of the fictive mid-plane, the method 800 proceeds to a step 804, where the computer aided engineering environment models distances to the mid-plane for individual magnets. This step involves calculating the spatial relationships between the permanent magnet and the electro magnet relative to the defined fictive mid-plane.

The method 800 then moves to a step 806, where the computer aided engineering environment computes tangential distances between the rotor and stator magnets. This step accounts for the relative positions of the permanent magnet and the electro magnet as the rotor rotates within the stator.

In a step 808, the computer aided engineering environment calculates the air gap size using a weighted combination. The air gap size is computed as a combination of axial distances to the mid-plane, weighted by radial interpolation functions of the tangential distances between the rotor and stator magnets. This calculation takes into account the complex geometry of the electric motor model and provides a more accurate representation of the air gap variations.

The method 800 then proceeds to a step 810, where the computer aided engineering environment updates the air gap size in the simulation. This step ensures that the most recent calculations of the air gap size are reflected in the ongoing simulation of the electric motor model.

After updating the air gap size, the method 800 includes a step 812, where the computer aided engineering environment determines if the simulation is complete. If the simulation is not complete, the process returns to step 808 to recalculate the air gap size for the next iteration. This iterative process continues until the simulation is determined to be complete.

Once the simulation is complete, the method 800 concludes with a step 814, where the computer aided engineering environment ends the air gap modeling process.

The method 800 enables the computer aided engineering environment to accurately model variations in the air gap size throughout the simulation of the electric motor model. By considering the complex geometrical relationships between the rotor and stator components, including the permanent magnet and the electro magnet, the method 800 provides a detailed representation of the air gap dynamics during motor operation.

This approach to modeling the air gap allows the computer aided engineering environment to account for various factors that influence the air gap size, such as the rotation speed, eccentricity, and potential manufacturing tolerances. By incorporating these factors into the air gap calculation, the method 800 contributes to a more comprehensive and accurate simulation of the electro-mechanical interactions within the electric motor model.

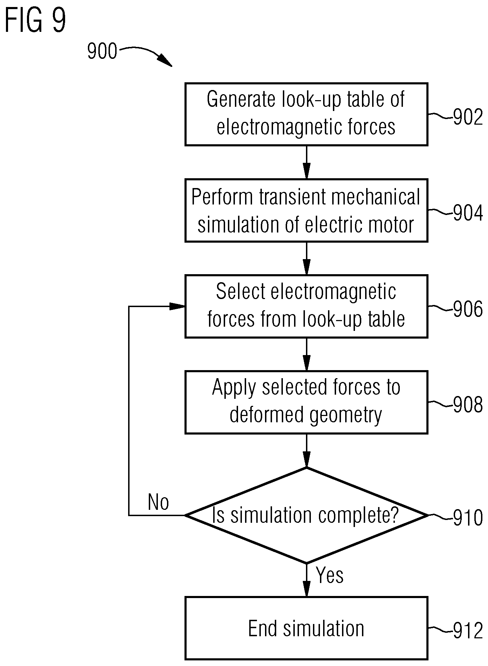

The computer aided engineering environment includes a method 900 for simulating electro-mechanical interactions in an electric motor, as illustrated in Figure 9. The method 900 comprises several steps that enable efficient modeling of the complex interplay between electromagnetic forces and mechanical deformations in the electric motor model.

The method 900 begins with a step 902, where the computer aided engineering environment generates a look-up table of electromagnetic forces. This look-up table contains pre-computed electromagnetic forces corresponding to different air gap sizes between the rotor and stator of the electric motor model. The look-up table includes the initial force, the first force, the second force, the third force, the fourth force, the fifth force, and the sixth force, each associated with the initial gap size, the first gap size, the second gap size, the third gap size, the fourth gap size, the fifth gap size, and the sixth gap size, respectively.

Following the generation of the look-up table, the method 900 proceeds to a step 904, where the computer aided engineering environment performs a transient mechanical simulation of the electric motor model. This simulation captures the dynamic behavior of the electric motor model over time, accounting for various factors such as the rotation speed and mechanical loads.

During the transient mechanical simulation, the method 900 includes a step 906 where the computer aided engineering environment selects electromagnetic forces from the previously generated look-up table. The selection of forces is based on the current air gap sizes in the simulated electric motor model. This step allows the simulation to account for changes in electromagnetic forces as the air gap size varies due to mechanical deformations or other factors.

The method 900 then proceeds to a step 908, where the computer aided engineering environment applies the selected forces to the deformed geometry of the electric motor model. This step ensures that the simulation accurately represents the interaction between electromagnetic forces and the mechanical structure of the electric motor model as it deforms during operation.

After applying the forces, the method 900 includes a step 910 where the computer aided engineering environment determines if the simulation is complete. If the simulation is not complete, the method 900 returns to step 906 to select new forces based on the updated air gap sizes. This iterative process continues until the simulation is determined to be complete.

Once the simulation is complete, the method 900 concludes with a step 912, where the computer aided engineering environment ends the simulation process.

The method 900 shares similarities with the method 700 described earlier, particularly in the overall structure of generating a look-up table, performing a transient mechanical simulation, and iteratively selecting and applying forces. However, the method 900 emphasizes the use of pre-computed electromagnetic forces stored in the look-up table, which allows for efficient force selection during the simulation process.

By utilizing this approach, the method 900 enables the computer aided engineering environment to efficiently model the electro-mechanical interactions in the electric motor model while considering dynamic changes in air gap sizes. This method provides a balance between computational efficiency and accuracy, making it suitable for rapid design iterations and comprehensive analysis of electric motor performance under various operating conditions.

A number of implementations have been described. Nevertheless, it will be understood that various modifications may be made without departing from the spirit and scope of the disclosure. Accordingly, other implementations are within the scope of the following claims.

## Claims

1. A system for simulating electro-mechanical interactions in an electric motor (MTR), comprising:
a processor; and
a memory storing instructions that, when executed by the processor, cause the system to:
generate, using a magnetostatic solver (SLV), a look-up table of electromagnetic forces (FRC) corresponding to different air gap sizes between a rotor and a stator of the electric motor (MTR);
**characterised in that** the system is configured to:
perform, using a mechanical solver (SLV), a transient mechanical simulation (TMS) of the electric motor (MTR); and
during the transient mechanical simulation (TMS), select electromagnetic forces (FRC) from the look-up table based on current air gap sizes and apply the selected electromagnetic forces (FRC) to a deformed geometry of the electric motor model (MDL).

2. The system of claim 1, wherein the look-up table includes electromagnetic forces (F0, F1, F2, F3, F4, F5, F6) corresponding to different air gap sizes (dG0, dG1, dG2, dG3, dG4, dG5, dG6) between the rotor and stator.

3. The system of claim 2, wherein the instructions, when executed by the processor, further cause the system to:
interpolate, during the transient mechanical simulation (TMS), between pre-computed electromagnetic forces (FRC) in the look-up table based on a current air gap size.

4. The system of claim 1, wherein the instructions, when executed by the processor, further cause the system to:
generate, using the magnetostatic solver (SLV), the look-up table for different angular positions of the rotor relative to the stator.

5. The system of claim 1, wherein the mechanical solver (SLV) is configured to perform a transient rotor dynamics (RDYN) simulation.

6. The system of claim 1, wherein the instructions, when executed by the processor, further cause the system to:
model, variations in the air gap size during the transient mechanical simulation (TMS).

7. The system of claim 6, wherein modeling the variations in the air gap size comprises:
defining a fictive mid-plane between the rotor and the stator;
modelling distances to the mid-plane for individual magnets (MGN); and
computing the air gap size as a combination of axial distances to the mid-plane weighted by radial interpolation functions of tangential distances between rotor and stator magnets (MGN).

8. A method for simulating electro-mechanical interactions in an electric motor (MTR), comprising:
generating, by a processor executing a magnetostatic solver (SLV), a look-up table of electromagnetic forces (FRC) corresponding to different air gap sizes between a rotor and a stator of the electric motor (MTR);
**characterised in that** the method further comprises:
performing, by the processor executing a mechanical solver (SLV), a transient mechanical simulation (TMS) of the electric motor (MTR); and
during the transient mechanical simulation (TMS), selecting, by the processor, electromagnetic forces (FRC) from the look-up table based on current air gap sizes and applying the selected electromagnetic forces (FRC) to a deformed geometry of the electric motor model (MDL).

9. The method of claim 8, wherein the look-up table includes electromagnetic forces (F0, F1, F2, F3, F4, F5, F6) corresponding to different air gap sizes (dG0, dG1, dG2, dG3, dG4, dG5, dG6) between the rotor and stator.

10. The method of claim 9, further comprising:
interpolating, by the processor during the transient mechanical simulation (TMS), between pre-computed electromagnetic forces (FRC) in the look-up table based on a current air gap size.

11. The method of claim 8, further comprising:
generating, by the processor executing the magnetostatic solver (SLV), the look-up table for different angular positions of the rotor relative to the stator.

12. The method of claim 8, wherein performing the transient mechanical simulation (TMS) comprises executing, by the processor, a transient rotor dynamics (RDYN) simulation using the mechanical solver (SLV).

13. The method of claim 8, further comprising:
modeling, by the processor, variations in the air gap size during the transient mechanical simulation (TMS).

14. The method of claim 13, wherein modeling the variations in the air gap size comprises:
defining, by the processor, a fictive mid-plane between the rotor and the stator;
modelling distances to the mid-plane for individual magnets (MGN); and
computing, by the processor, the air gap size as a combination of axial distances to the mid-plane weighted by radial interpolation functions of tangential distances between rotor and stator magnets (MGN).

15. A non-transitory computer-readable storage medium storing instructions that, when executed by a processor, cause the processor to perform a method for simulating electro-mechanical interactions in an electric motor (MTR), the method comprising:
generating, using a magnetostatic solver (SLV), a look-up table of electromagnetic forces (FRC) corresponding to different air gap sizes between a rotor and a stator of the electric motor (MTR);
**characterised in that** the method further comprises:
performing, using a mechanical solver (SLV), a transient mechanical simulation (TMS) of the electric motor (MTR); and
during the transient mechanical simulation (TMS), selecting electromagnetic forces (FRC) from the look-up table based on current air gap sizes and applying the selected electromagnetic forces (FRC) to a deformed geometry of the electric motor model (MDL).

16. The non-transitory computer-readable storage medium of claim 15, wherein the look-up table includes electromagnetic forces (F0, F1, F2, F3, F4, F5, F6) corresponding to different air gap sizes (dG0, dG1, dG2, dG3, dG4, dG5, dG6) between the rotor and stator.

17. The non-transitory computer-readable storage medium of claim 16, wherein the method further comprises:
interpolating, by the processor during the transient mechanical simulation (TMS), between pre-computed electromagnetic forces (FRC) in the look-up table based on a current air gap size.

18. The non-transitory computer-readable storage medium of claim 15, wherein the method further comprises:
generating, by the processor executing the magnetostatic solver (SLV), the look-up table for different angular positions of the rotor relative to the stator.

19. The non-transitory computer-readable storage medium of claim 15, wherein performing the transient mechanical simulation (TMS) comprises executing, by the processor, a transient rotor dynamics (RDYN) simulation using the mechanical solver (SLV).

20. The non-transitory computer-readable storage medium of claim 19, wherein the method further comprises:
modeling, by the processor, variations in the air gap size during the transient mechanical simulation (TMS) by:
defining a fictive mid-plane between the rotor and the stator;
modeling distances to the mid-plane for individual magnets (MGN); and
computing the air gap size as a combination of axial distances to the mid-plane weighted by radial interpolation functions of tangential distances between rotor and stator magnets (MGN).
